# FASCICULE DE BREVET EUROPEEN

(11) **EP 3 480 915 B1**
(45) Date de publication et mention de la délivrance du brevet: **07.07.2021**
(21) Numéro de dépôt: 18204393.5
(22) Date de dépôt: 05.11.2018
(51) Int. Cl.: B60L 53/50, H02J 7/34, F03B 13/00, H02J 7/00, H02J 7/32

(54) **INSTALLATION DE RECHARGE DE VÉHICULES ÉLECTRIQUES EQUIPÉE D'UNE TURBOGÉNÉRATRICE EXPLOITANT LES RÉSEAUX DE FLUIDES**
ANLAGE ZUM WIEDERAUFLADEN ELEKTRISCHER FAHRZEUGE, AUSGESTATTET MIT EINEM DEN FLÜSSIGKEITSVERTEILNETZEN AUSNUTZENDEN TURBOGENERATOR
INSTALLATION FOR RECHARGING ELECTRIC VEHICLES EQUIPPED WITH A TURBOGENERATOR UTILISING FLUID DISTRIBUTION NETWORKS

(30) Priorité: 06.11.2017 FR 1760407
(43) Date de publication de la demande: 08.05.2019
(73) Titulaire: Vanbaleghem, Marc, 59310 Beuvry-la-Forêt (FR); Dewez, Stéphane, 69126 Brindas (FR)
(72) Inventeur: VANBALEGHEM, Marc, 59310 Beuvry-la-Fôret (FR)
(74) Mandataire: Cabinet Rifflart Vandenbossche

(56) Documents cités:
- EP-A2- 2 022 978
- WO-A1-2017/146349
- WO-A2-2009/106945
- DE-A1-102010 045 715
- DE-U1-202011 105 407
- US-A1- 2012 274 066
- US-A1- 2014 103 662

## Description

### Domaine technique

La présente invention se rapporte au domaine des installations de recharge de véhicules électriques.

La présente invention vise tout particulièrement à permettre le développement de tels véhicules.

### Etat de la technique

Le succès des véhicules électriques dépend essentiellement de la capacité à recharger ces véhicules à tout moment et en tout lieu, ce qui implique le développement des stations de recharge sur le territoire et une gestion convenable du réseau électrique pour être en mesure d'éviter les pics de consommation et des coupures électriques, tout en respectant l'environnement.

Des solutions se développent, comme la technologie Smart Grid ou les installations de recharge de véhicules électriques produisant leur propre énergie électrique au moyen d'éoliennes ou de panneaux photovoltaïques.

Il est connu des installations permettant de produire de l'électricité à partir d'une turbogénératrice raccordée sur un circuit d'eau, de telles installations étant décrites dans les demandes de brevet US2012/274066 A1,

WO 2009/106945 A2, WO 2017/146349 A1 et EP 2 022 978 A2 et dans le modèle d'utilité DE 20 2011 105 407 U1. Le document DE 10 2010 045715 A1 enseigne également une installation de recharge de véhicules électriques comprenant un générateur raccordé à une turbine placée dans un fleuve ou une rivière.

### Résumé de l'invention

La présente invention a pour objectif de développer une alternative aux éoliennes et au panneaux photovoltaïques afin d'accélérer encore le développement des installations de recharge de véhicules électriques sur tous les territoires.

L'invention est définie par la revendication indépendante 1. Les modes particuliers de réalisation sont définis par les revendications dépendantes.

A cet effet, l'invention concerne une installation de recharge de véhicules électriques comprenant au moins un poste de recharge muni d'au moins un socle de prise configuré pour le branchement d'un véhicule électrique. Ce poste de recharge se présente sous la forme d'une borne ou d'un coffret, notamment, selon le lieu de son implantation. L'installation comprend un conduit de circulation d'un fluide et au moins deux turbogénérateurs raccordés sur le conduit et permettant la production d'électricité grâce au fluide circulant dans ce conduit. En outre, l'installation comprend des moyens de distribution électrique configurés pour alimenter électriquement l'au moins un poste de recharge depuis les au moins deux turbogénérateurs, c'est-à-dire grâce à l'énergie électrique produite par ces au moins deux turbogénérateurs.

Selon l'invention on entend par turbogénérateur un turbogénérateur en tant que tel (ensemble formé d'une turbine accouplée à un alternateur), mais également tout type d'accouplement d'une turbine ou d'un moteur à palettes ou à lobes avec un alternateur indépendant, le fluide circulant dans le conduit de circulation entrainant la rotation de l'arbre de sortie de la turbine ou du moteur accouplé à l'arbre d'entrée de l'alternateur et, ainsi, la production d'électricité en sortie de l'alternateur. On pourrait encore envisager d'autres systèmes capables d'entraîner en rotation un arbre sous l'action de la circulation du fluide, par exemple un piston rotatif. Ces systèmes sont également sous le couvert du terme turbogénérateur, au sens de l'invention.

Selon l'installation de recharge, le conduit comprend une ligne munie d'un détendeur permettant de réduire la pression du fluide à une valeur de pression P. En outre, les au moins deux turbogénérateurs sont agencés en amont du détendeur sur cette ligne et configurés pour maintenir en sortie une pression du fluide supérieure à la pression P. La pression en sortie des turbines des au moins deux turbogénérateurs sera de préférence légèrement supérieure à la pression en sortie du détendeur. La disposition des au moins deux turbogénérateurs en amont du détendeur permet avantageusement d'éviter une variation de pression trop importante entre l'entrée et la sortie de ce détendeur, ce qui évite des baisses de température importantes sur le conduit. Ces baisses de température importantes peuvent avoir pour incidence de fragiliser le conduit. On pallie ainsi ce problème.

Selon l'invention, au moins deux turbogénérateurs sont montés en parallèle sur une rampe de distribution agencée sur cette ligne, en amont du détendeur. En outre, la rampe de distribution est configurée pour alimenter en fluide tout ou partie des turbogénérateurs en fonction des variations de consommation du fluide, des moyens de gestion permettant de contrôler la rampe de distribution. Cela permet d'adapter l'installation en fonction de la consommation de fluide qui peut varier au cours de l'année, notamment lorsque ce fluide est du gaz, la consommation de gaz variant considérablement en fonction des saisons et de la journée, selon les besoins de chauffer les foyers et les bâtiments.

Selon une variante de réalisation de l'installation de recharge, le conduit comprend une ligne principale munie d'un premier détendeur configuré pour réduire la pression du fluide à une première valeur de pression P1 et une ligne secondaire montée en parallèle de la ligne principale. La ligne secondaire est munie d'un second détendeur configuré pour réduire la pression du fluide à une seconde valeur de pression P2, inférieure à la première valeur de pression P1. En outre, la rampe de distribution est agencée en amont du premier détendeur sur la première ligne, les turbogénérateurs de la rampe étant configurés pour maintenir en sortie une pression du fluide supérieure à la première valeur de pression P1. Dans une autre variante, selon cette réalisation, une rampe est agencée en amont du second détendeur sur la seconde ligne, les turbogénérateurs étant configurés pour maintenir en sortie une pression du fluide supérieure à la seconde valeur de pression P2.

Selon une variante de réalisation de l'installation de recharge, le conduit comprend une ligne principale munie d'un premier détendeur configuré pour réduire la pression du fluide à une première valeur de pression P1 et une ligne secondaire montée en parallèle de la ligne principale. La ligne secondaire est munie d'un second détendeur configuré pour être réglé de sorte à réduire la pression du fluide soit à une seconde valeur de pression P2, inférieure à la première valeur de pression P1, soit à une troisième valeur de pression P3, supérieure à la première valeur de pression P1. En outre, une rampe est agencée en amont du second détendeur sur la seconde ligne, les turbogénérateurs de cette rampe étant configurés pour maintenir en sortie une pression du fluide supérieure à la troisième valeur de pression P3. Ainsi, l'au moins un turbogénérateur entre en fonctionnement uniquement lorsque la ligne secondaire relaye la ligne principale. Dans des conditions normales d'utilisation où le second détendeur est réglé à la valeur de pression P2, celui-ci relaye la ligne principale lors d'une défaillance sur cette ligne principale. Toutefois, selon cette réalisation de l'installation, il est possible de forcer le relayage de la ligne principale par la ligne secondaire, en réglant le second détendeur sur la valeur de pression P3.

Selon cette variante de réalisation précitée, l'installation comprend des moyens de commande configurés pour agir sur le réglage du second détendeur de sorte à réduire la pression du fluide à la seconde valeur de pression P2 tant que l'au moins un poste de recharge n'est pas activé et à augmenter la pression du fluide à la troisième valeur de pression P3 lorsqu'au moins un poste de recharge est activé. Ainsi, l'installation permet d'assurer le fonctionnement de l'au moins un turbogénérateur au moins durant la recharge du véhicule, cet au moins un turbogénérateur fonctionnant également lors d'une défaillance de la ligne principale.

Selon l'installation de recharge, pour l'une ou l'autre des réalisations précitées, voire pour d'autres variantes de réalisation, la pression du fluide en amont du ou des détendeurs a une valeur comprise entre 3 bars et 200 bars, le ou les turbogénérateurs étant adaptés en fonction de la valeur de cette pression.

Selon un mode de conception particulier, pour la variante de réalisation précitée de l'installation de recharge avec le détendeur réglable sur la ligne secondaire, la pression du fluide en amont du détendeur est de l'ordre de 70 bars, la première valeur de pression P1 étant de l'ordre de 35 bars, la seconde valeur de pression P2 étant de l'ordre de 34 bars et la troisième valeur de pression P3 étant de l'ordre de 36 bars.

Selon l'installation de recharge, le fluide circulant dans le conduit est un gaz. On peut toutefois envisager la mise en œuvre de l'installation lorsque le fluide est de l'eau, les pressions de l'eau étant toutefois bien inférieures à celles du gaz.

Dans une réalisation préférentielle de l'installation de recharge selon l'invention, le conduit comprend une entrée raccordée à un point de soutirage agencé sur un réseau de circulation d'un fluide. Dans une variante, selon cette réalisation préférentielle, le conduit comprend une sortie raccordée à un point d'injection agencé sur un réseau de circulation d'un fluide. Ainsi, l'installation permet de soutirer du fluide acheté à un transporteur, un distributeur ou un fournisseur, d'exploiter ce fluide circulant dans le conduit de l'installation objet de l'invention pour la recharge des véhicules électriques, puis de réinjecter ce fluide dans le réseau afin de le revendre au transporteur, au distributeur ou au fournisseur. Bien entendu, on pourrait simplement prévoir un point de soutirage sur le réseau pour exploiter le fluide au moyen de l'installation selon l'invention et pour ensuite consommer ce fluide pour les besoins d'une habitation ou d'un site industriel, par exemple.

On entend par réseau de circulation : un réseau de transport, un réseau de distribution ou un réseau intérieur chez un particulier (locaux d'habitation) ou un professionnel (site industriel ou tous autres locaux d'entreprises).

Ainsi, l'invention permet avantageusement d'exploiter la possibilité offerte par l'existence de ces réseaux de transport et de distribution du gaz ou de l'eau qui sont répandus sur tout le territoire, pour la production d'électricité nécessaire à la recharge des véhicules. Il convient simplement de demander des points de soutirage et des points d'injection sur ces réseaux et à proximité de ces derniers pour y mettre en œuvre l'installation objet de l'invention, aux emplacements où l'on souhaite disposer les postes de recharge. Le particulier ou le professionnel pourra également procéder à cette mise en place sur son propre réseau.

Selon une variante de cette réalisation préférentielle, lorsqu'un point de soutirage et un point d'injection sont demandés, le point de soutirage pourra être demandé en amont d'un détendeur agencé sur le réseau de circulation et le point d'injection pourra être demandé en aval de ce détendeur sur ledit réseau de circulation, ledit détenteur étant réglé à une pression P4. Les turbogénérateurs de l'installation selon l'invention, agencés entre le point de soutirage et le point d'injection sur le conduit, seront alors configurés pour maintenir en sortie une pression du fluide légèrement supérieure à la pression P4 en sortie du détendeur, de manière à les rendre prioritaires en émission vis-à-vis dudit détendeur.

D'autres variantes de réalisation combinant l'une et/ou l'autre des variantes de réalisation précitées peuvent également être envisagées dans le cadre de l'invention.

### Brève description des figures

Les caractéristiques et avantages de l'invention apparaîtront à la lecture de la description suivante s'appuyant sur des figures, parmi lesquelles :
- La figure 1 schématise un exemple de réalisation de l'installation de recharge de véhicule électrique ;
- Les figures 2 à 5 schématisent quatre variantes d'implantation de turbogénérateurs sur diverses conceptions du conduit de circulation du fluide de l'installation ;
- Les figures 6 à 8 illustrent trois variantes de mise en œuvre d'une installation selon l'invention sur un réseau de circulation d'un fluide.

### Description détaillée

Dans la description suivante, les mêmes références sont utilisées pour décrire les caractéristiques identiques ou similaires selon les diverses variantes de réalisation, sauf indications contraires.

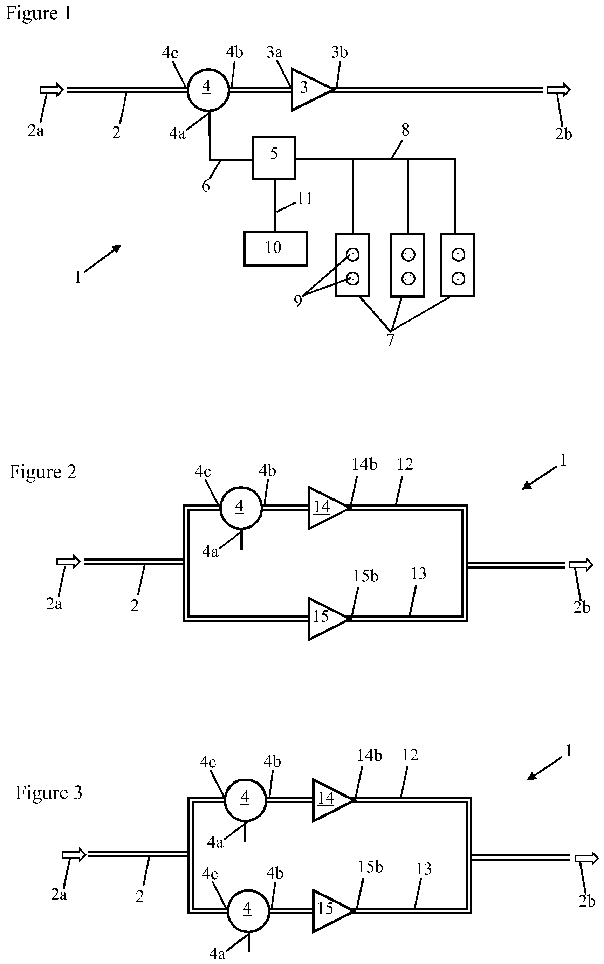

Sur la figure 1 est illustrée une installation de recharge de véhicules électriques, dénommée dans la suite de la description l'installation 1. L'installation 1 comprend un conduit 2, dans lequel circule un fluide qui peut être du gaz de ville ou de l'eau.

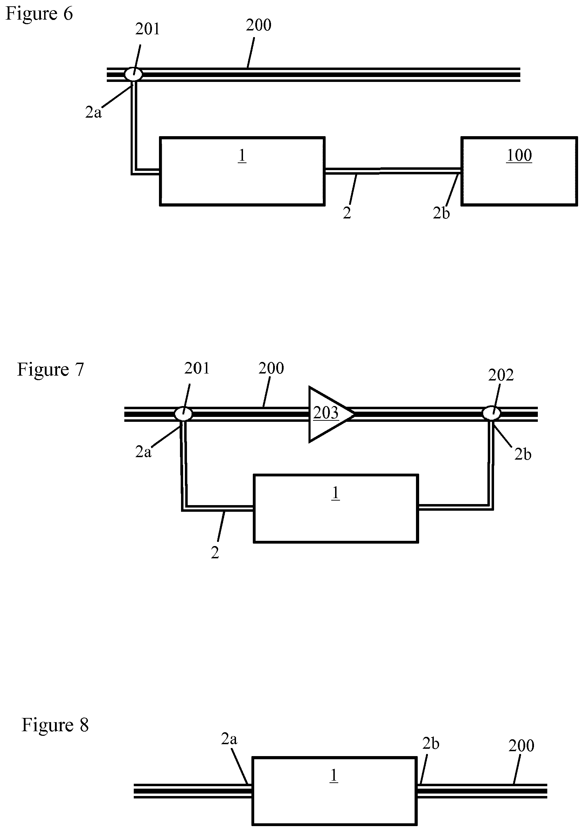

Avantageusement, l'installation 1 exploite un réseau 200 de circulation d'un fluide existant qui alimente en fluide des foyers et des locaux ou bâtiments, des entreprises ou autres. Ce réseau 200, illustré sur les exemples non limitatifs des figures 6 à 8, peut être un réseau de transport ou de distribution d'un prestataire externe ou un réseau mis en place spécifiquement pour la mise en place de l'installation 1 objet de l'invention, voire pour alimenter d'autres installations 100, par exemple un site industriel ou une maison d'habitation. Sur les figures 6 et 7, un point de soutirage 201 est mis en place sur le réseau 200, une entrée 2a du conduit 2 de l'installation 1 étant raccordée à ce point de soutirage 201. Comme illustré en figure 6 et précisé ci-avant, la sortie 2b du conduit 2 de l'installation 1 peut alimenter une autre installation 100. Toutefois, comme l'illustre la figure 7, le réseau 200 peut comprendre un point d'injection 202 sur lequel est raccordée la sortie 2b du conduit 2 de sorte à réinjecter le fluide sur le réseau 200 après avoir exploité celui-ci pour les besoins de l'installation 1 objet de l'invention. Sur cette figure 7, le point de soutirage 201 est disposé en amont d'un détendeur 203 sur le réseau 200 et le point d'injection 202 est disposé en aval de ce détendeur 203. Dans ce cas de la figure 7, l'installation 1 sera configurée pour conserver en sortie 2b du conduit 2 une pression légèrement supérieure à la pression de réglage du détendeur 203, de manière à rendre prioritaire en émission l'installation 1 vis-à-vis du détendeur 203. En d'autres termes, cette pression légèrement supérieure à la pression de réglage du détendeur 203 permet à l'installation 1 de shunter le tronçon du réseau 200 situé entre le point de soutirage 201 et le point d'injection 202. Comme l'illustre la figure 8, on pourrait toutefois envisager, en variante, la mise en œuvre de l'installation 1 directement sur un réseau 200.

A titre d'exemple, en France, l'acheminement du gaz s'effectue par plusieurs paliers. Le gaz de ville est d'abord transporté dans le réseau à une pression de l'ordre de 70 bars (parfois 110 bars ou 200 bars), puis est réduit successivement par l'intermédiaire de détendeurs par exemple à une pression de l'ordre 35 à 40 bars et à une pression de l'ordre de 4 à 16 bars, pouvant être alors distribué à des clients directs. Généralement, cette pression est réduite à nouveau au niveau du coffret de gaz des foyers, à une pression de l'ordre de 21 à 25 millibars, ce coffret incorporant généralement un détendeur et un compteur.

L'acheminement de l'eau potable peut également s'effectuer par paliers au moyen de détendeurs, pour atteindre au niveau des foyers une pression de l'ordre de 1 à 4 bars. Toutefois la pression initiale de l'eau est beaucoup moins importante que dans le cas du gaz, de l'ordre de 10 bars.

On privilégiera donc la mise en œuvre de l'installation 1 sur les réseaux 200 de circulation du gaz, sans exclure toutefois les réseaux 200 de circulation de l'eau.

Sur la figure 1, l'installation 1 comprend un détendeur 3 et un turbogénérateur 4 qui sont installés sur le conduit 2. La circulation du fluide dans la turbine (non illustrée) du turbogénérateur 4 permet de générer de l'électricité en sortie 4a de l'alternateur (non illustré) dudit turbogénérateur 4. La conception d'un tel turbogénérateur 4 est bien connue, raison pour laquelle elle n'est pas détaillée.

Sur la figure 1, l'installation 1 comprend une armoire électrique de gestion, appelée ensuite armoire 5, qui raccordée par le biais d'un câble 6 à la sortie 4a du turbogénérateur 4. Cette armoire 5 est connectée à des postes de charge de véhicules électriques, appelés ensuite postes de charge 7, par le biais de câbles 8. Sur la figure 1, trois postes de charge 7 sont illustrés, mais leur nombre peut varier entre un et dix, par exemple. Chaque poste de charge 7 comprend au moins un socle de prise 9 pour le raccordement à un véhicule électrique (non illustré) devant être rechargé. Ces postes de charge 7 peuvent être des bornes ou des coffrets de recharge, tels que connus, selon les lieux d'implantation (stations de recharge publiques ou garages privatifs).

Sur la figure 1, l'installation 1 comprend une batterie 10 (voire plusieurs batteries 10, selon le dimensionnement de l'installation 1) raccordée à l'armoire 5 par le biais d'un câble 11. L'armoire 5 est configurée pour gérer le stockage provisoire dans la batterie 10 de l'électricité produite par le turbogénérateur 4, puis pour restituer cette électricité stockée dans la batterie 10 et la distribuer au poste de charge 7 lorsqu'un véhicule électrique est branché sur celui-ci.

Sur la figure 1, l'installation 1 comprend un détendeur 3 permettant de réduire la pression du fluide dans le conduit 2. Par exemple, dans le cas d'un gaz de ville, le détendeur 3 peut permettre de réduire la pression du gaz d'une valeur de l'ordre de 70 bars en entrée 2a du conduit 2, à une valeur de l'ordre de 35 à 40 bars en sortie 2b dudit conduit 2, voire peut permettre de réduire la pression du gaz d'une valeur de l'ordre de 35 à 40 bars en entrée 2a, à une valeur de l'ordre de bars 4 à 16 bars en sortie 2b. Du fait de la détente du fluide dans le détendeur 3, le conduit 2 subit une forte baisse de température pouvant engendrer sa rupture, notamment dans les périodes de froid. Le positionnement du turbogénérateur 4 en amont du détendeur 3 permet avantageusement de réduire la pression du fluide en entrée 3a dudit détendeur 3.

Le turbogénérateur 4 sera dimensionné pour que la pression du fluide à sa sortie 4b soit supérieure à la pression en sortie 3b du détendeur 3, par exemple de l'ordre de 0,5 à 10 bars, de préférence de 0,5 à 3 bars. Par exemple, lorsque le détendeur 3 est réglé à une pression P en sortie 3b, d'une valeur de l'ordre de 35 bars, la pression P' en sortie 4b du turbogénérateur 4 sera de l'ordre de 38 bars, la pression P" du fluide en entrée 4c du turbogénérateur 4 étant de l'ordre de 70 bars. Selon un autre exemple, lorsque la pression P est de l'ordre de 21 à 25 millibars, la pression P' sera de l'ordre de 0,5 bars pour une pression P" de l'ordre de 4 bars.

Les figures 2 à 4 illustrent des variantes selon lesquelles l'installation 1 est mise en œuvre sur un conduit 2 comprenant une ligne principale 12 et une ligne secondaire 13 montées tous les deux en parallèles. L'armoire 5, la batterie 10 et les postes de charge 7 ne sont pas représentés sur les figures 2 et 3, afin d'alléger celles-ci.

Dans le cas des figures 2 et 3, la ligne principale 12 comporte un détendeur 14 réglé pour délivrer à sa sortie 14b une pression P1 et la ligne secondaire 13 comporte un détendeur 15 réglé pour délivrer à sa sortie 15b une pression P2 légèrement inférieure à la pression P1. Par exemple, la pression P1 est de 35 bars et la pression P2 est de 34 bars. Ainsi, en mode de fonctionnement normal, seule la ligne principale 12 permet la circulation du fluide dans le conduit 2. En cas de disfonctionnement engendrant une chute de pression sur la ligne principale 12 en-dessous d'un seuil correspondant à la valeur P2, la ligne secondaire 13 prend la main et le fluide se met à circuler dans le conduit 2 en passant par cette ligne secondaire 13. Sur la figure 2, un turbogénérateur 4 est installé en amont du détendeur 14 sur la ligne principale 12. Tandis que sur la figure 3, deux turbogénérateurs 4 sont installés en amont des détendeurs 14, 15 respectivement sur la ligne principale 12 et sur la ligne secondaire 13. Le ou les turbogénérateurs 4 sont raccordés sur l'armoire 5, comme dans le cas de la figure 1.

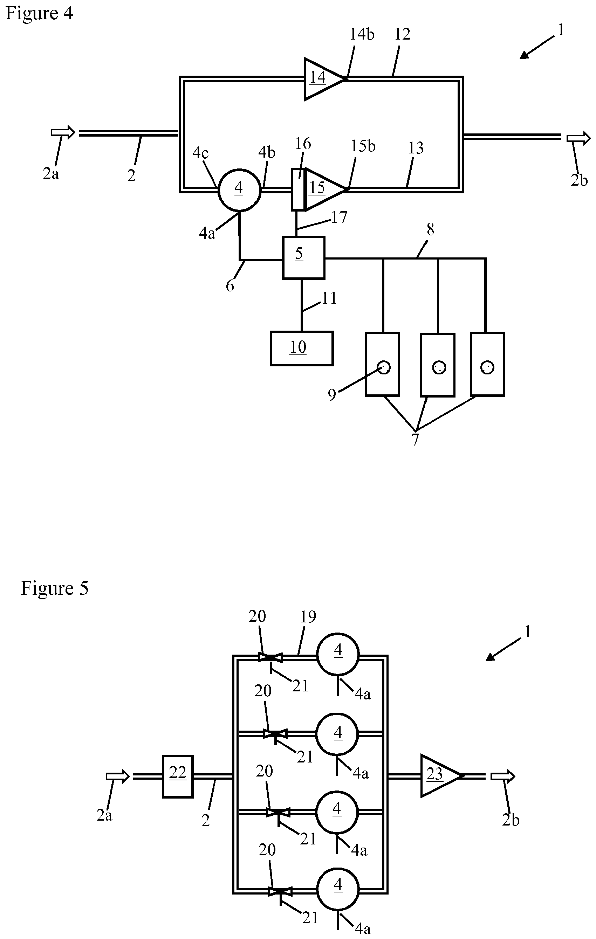

Dans le cas de la figure 4, la ligne principale 12 comprend comme précédemment un détendeur 14 réglé pour délivrer une pression P1. Cependant, le détendeur 15 sur la ligne secondaire 13 est muni d'un système de réglage 16 permettant de modifier la pression en sortie 15b, afin de régler ce détenteur 15 soit à une pression P2, inférieure à la pression P1, soit à une pression P3, supérieure à la pression P1. Par exemple, la pression P1 sera égale à 35 bars, la pression P2 sera égale à 34 bars et la pression P3 sera égale à 36 bars. La ligne secondaire 13 est équipée d'un turbogénérateur 4 disposé en amont du détendeur 15. L'armoire 5 est connectée au système de réglage 16 par le biais d'un câble 17, voire d'un émetteur/récepteur (non illustré) assurant une connexion à distance de type radiofréquence. En fonctionnement normal, lorsque le détendeur 15 est réglé à la pression P2, la ligne principale 12 prend la main et assure une circulation du fluide. En cas de défaillance de la ligne principale 12 entraînant une chute de pression dans celle-ci en-dessous d'une valeur correspondant à P2, la ligne secondaire 13 prend la main, le turbogénérateur 4 assurant la recharge de la batterie 10. Lorsqu'un véhicule électrique est connecté à un poste de charge 7, l'armoire 5 est informée et agit sur le système de réglage 16 du détendeur 15 pour le régler à la pression P3, ce qui force la main et assure le passage du fluide dans la ligne secondaire 13, permettant au turbogénérateur 4 de fonctionner et d'alimenter électriquement directement le poste de charge 7 activé. L'armoire 5 est configurée pour gérer la distribution de l'électricité vers la batterie 10 ou vers le ou les postes de charge 7 lors de leur activation.

Sur la figure 5, le conduit 2 comporte une rampe 18 à quatre lignes 19 équipées chacune d'une électrovanne 20 et d'un turbogénérateur 4. Sur cette figure 5, l'armoire 5, la batterie 10 et les postes de charge 7 ne sont pas illustrés, mais ceux-ci seront également présents. Les électrovannes 20 sont connectées à l'armoire 5 par des câbles 21 voire par une connexion à distance de type émetteur/récepteur (non illustré). L'armoire 5 gère la commande des électrovannes 20 en fonction des variations de consommation du fluide, notamment du gaz, lesquelles peuvent parfois évoluer fortement dans chaque foyer selon les saisons et les périodes de la journée.

Sur la figure 5, l'installation 1 est mise en œuvre en aval d'un compteur 22 agencé sur le conduit 2, lequel sera généralement fourni par le distributeur. Un tel compteur 22 peut également être mis en place sur l'installation 1 dans le cas des figures 1 à 4. Un détendeur 23 est disposé en aval de la rampe 18, sur la figure 5.

Bien entendu, l'armoire 5 comprendra les convertisseurs alternatif/continu (non illustrés) nécessaires pour alimenter électriquement les postes de charge 7 ou recharger les batteries depuis le ou les turbogénérateur 4.

L'installation 1 telle qu'illustrée selon les diverses variantes de réalisation des figures 1 à 5, lesquelles n'ont en outre aucun caractère limitatif, pourra être mise en place en tout point des réseaux 200 de circulation des fluides de type gaz ou eau. L'installation 1 tiendra simplement compte des pressions du fluide sur le réseau 200 pour son dimensionnement. Par exemple, lorsque l'installation 1 est mise en œuvre sur le réseau 200 de distribution du gaz de ville ou d'eau directement au niveau d'un foyer, où le fluide se situe à une pression de l'ordre de 4 bars en entrée 2a, l'installation 1 comprendra un ou deux postes de charge 7 de type coffret de charge avec un socle de prise 9. Au contraire, lorsque l'installation 1 est mise en œuvre sur un tronçon du réseau 200 de manière à disposer en entrée 2a d'un fluide à une pression de l'ordre de 70 bars, celle-ci pourra disposer d'un nombre de postes de charge 7 beaucoup plus conséquent.

D'autres variantes sont envisageables dans le cadre de l'invention. On pourrait par exemple prévoir une rampe 18 sur les variantes de l'installation 1 illustrées en figures 2 à 4.

## Revendications

1. Installation (1) de recharge de véhicules électriques comprenant au moins un poste de recharge (7) muni d'au moins un socle de prise (9) configuré pour le branchement d'un véhicule électrique, un conduit (2) de circulation d'un fluide, au moins deux turbogénérateurs (4) raccordés sur le conduit (2) et permettant la production d'électricité et des moyens de distribution électrique (5, 10) configurés pour alimenter électriquement le au moins un poste de recharge (7) depuis les au moins deux turbogénérateurs (4), ledit conduit (2) comprenant une ligne munie d'un détendeur (3, 23) qui permet de réduire la pression du fluide à une valeur de pression P, **caractérisée en ce que** les au moins deux turbogénérateurs (4) sont montés en parallèle sur une rampe de distribution (18) en amont du détendeur sur cette ligne et configurés pour maintenir en sortie une pression du fluide supérieure à la pression P, la rampe de distribution étant configurée pour alimenter tout ou partie des turbogénérateurs (4) en fonction des variations de consommation du fluide, des moyens de gestion (5, 20) permettant de contrôler la rampe de distribution.

2. Installation de recharge (1) selon la revendication 1, dans laquelle la rampe (18) comprend des lignes (19) montées en parallèle et équipées chacune d'une électrovanne (20) et d'un turbogénérateur (4), les moyens de gestions comprenant une armoire (5) qui gère la commande des électrovannes (20) en fonction des variations de consommation du fluide.

3. Installation de recharge (1) selon l'une des revendications 1 ou 2, dans laquelle le conduit (2) comprend une ligne principale (12) munie d'un premier détendeur (14) configuré pour réduire la pression du fluide à une première valeur de pression P1 et une ligne secondaire (13) montée en parallèle de la ligne principale, la ligne secondaire étant munie d'un second détendeur (15) configuré pour réduire la pression du fluide à une seconde valeur de pression P2, inférieure à la première valeur de pression P1, une rampe (18) étant agencée en amont du premier détendeur (14) sur la première ligne (12), les turbogénérateurs (4) de la rampe (18) étant configurés pour maintenir en sortie une pression du fluide supérieure à la première valeur de pression P1.

4. Installation de recharge (1) selon la revendication 3, dans laquelle une rampe (18) est agencée en amont du second détendeur (15) sur la seconde ligne (13), les turbogénérateurs (4) de cette rampe (18) étant configurés pour maintenir en sortie une pression du fluide supérieure à la seconde valeur de pression P2.

5. Installation de recharge (1) selon l'une des revendications 1 ou 2, dans laquelle le conduit (2) comprend une ligne principale (12) munie d'un premier détendeur (14) configuré pour réduire la pression du fluide à une première valeur de pression P1 et une ligne secondaire (13) montée en parallèle de la ligne principale, la ligne secondaire étant munie d'un second détendeur (15) configuré pour être réglé de sorte à réduire la pression du fluide soit à une seconde valeur de pression P2, inférieure à la première valeur de pression P1, soit à une troisième valeur de pression P3, supérieure à la première valeur de pression P1, une rampe (18) étant agencée en amont du second détendeur (15) sur la seconde ligne (13), les turbogénérateurs (4) de cette rampe (18) étant configurés pour maintenir en sortie une pression du fluide supérieure à la troisième valeur de pression P3.

6. Installation de recharge (1) selon la revendication 5, laquelle comprend des moyens de commande (5, 16) configurés pour agir sur le réglage du second détendeur (15) de sorte à réduire la pression du fluide à la seconde valeur de pression P2 tant que l'au moins un poste de recharge (7) n'est pas activé et à augmenter la pression du fluide à la troisième valeur de pression P3 lorsqu'au moins un poste de recharge (7) est activé.

7. Installation de recharge (1) selon l'une des revendications 2 à 7, dans laquelle la pression du fluide en amont du ou des détendeurs (3, 14, 15, 23) a une valeur comprise entre 3 bars et 70 bars, les turbogénérateurs (4) étant adaptés en fonction de la valeur de cette pression.

8. Installation de recharge (1) selon la revendication 7 rattachée à l'une des revendications 5 ou 6, dans laquelle la pression du fluide en amont du détendeur (14, 15) est de l'ordre de 70 bars, la première valeur de pression P1 étant de l'ordre de 35 bars, la seconde valeur de pression P2 étant de l'ordre de 34 bars et la troisième valeur de pression P3 étant de l'ordre de 36 bars.

9. Installation de recharge (1) selon l'une des revendications 1 à 8, dans laquelle le fluide est un gaz.

10. Installation de recharge (1) selon l'une des revendications 1 à 9, dans laquelle le conduit (2) comprend une entrée (2a) raccordée à un point de soutirage agencé sur un réseau (200) de circulation d'un fluide.

11. Installation de recharge (1) selon la revendication 10, dans laquelle le conduit (2) comprend une sortie (2a) raccordée à un point d'injection agencé sur un réseau (200) de circulation d'un fluide.

## Patentansprüche

1. Installation (1) zum Aufladen von Elektrofahrzeugen, umfassend mindestens eine Ladestation (7), die mit mindestens einem Steckdosensockel (9) versehen ist, der zum Anstecken eines Elektrofahrzeugs konfiguriert ist, einen Kanal (2) zum Zirkulieren eines Fluids, mindestens zwei Turbogeneratoren (4) die an den Kanal (2) angeschlossen sind, und die Erzeugung von Strom ermöglichen, und Stromverteilungsmittel (5, 10) die zur Stromversorgung der mindestens einen Ladestation (7) aus den mindestens zwei Turbogeneratoren (4) konfiguriert sind, wobei der Kanal (2) eine Leitung umfasst, die mit einem Druckminderer (3, 23) versehen ist, der es ermöglicht, den Druck des Fluids auf einen Druckwert P zu senken, **dadurch gekennzeichnet, dass** die mindestens zwei Turbogeneratoren (4) parallel auf einer Verteilungsrampe (18) stromaufwärts des Druckminderers in dieser Leitung montiert sind, und konfiguriert sind, um am Ausgang einen Druck des Fluids höher als den Druck P zu halten, wobei die Verteilungsrampe konfiguriert ist, um alle Turbogeneratoren oder einen Teil davon (4) in Abhängigkeit von den Fluidverbrauchsvariationen zu versorgen, wobei es Verwaltungsmittel (5, 20) ermöglichen, die Verteilungsrampe zu kontrollieren.

2. Installation zum Aufladen (1) nach Anspruch 1, wobei die Rampe (18) Leitungen (19) umfasst, die parallel montiert sind, und jeweils mit einem Magnetventil (20) und einem Turbogenerator (4) ausgerüstet sind, wobei die Verwaltungsmittel einen Schrank (5) umfassen, der die Steuerung der Magnetventile (20) in Abhängigkeit von den Fluidverbrauchsvariationen verwaltet.

3. Installation zum Aufladen (1) nach einem der Ansprüche 1 oder 2, wobei der Kanal (2) eine Hauptleitung (12) umfasst, die mit einem ersten Druckminderer (14) versehen ist, der konfiguriert ist, um den Druck des Fluids auf einen ersten Druckwert P1 zu senken, und eine Sekundärleitung (13), die parallel zur Hauptleitung montiert ist, wobei die Sekundärleitung mit einem zweiten Druckminderer (15) versehen ist, der konfiguriert ist, um den Druck des Fluids auf einen zweiten Druckwert P2, geringer als der erste Druckwert P1 zu senken, wobei eine Rampe (18) stromaufwärts des ersten Druckminderers (14) in der ersten Leitung (12) angeordnet ist, wobei die Turbogeneratoren (4) der Rampe (18) konfiguriert sind, um am Ausgang einen Druck des Fluids höher als den ersten Druckwert P1 zu halten.

4. Installation zum Aufladen (1) nach Anspruch 3, wobei eine Rampe (18) stromaufwärts des zweiten Druckminderers (15) in der zweiten Leitung (13) angeordnet ist, wobei die Turbogeneratoren (4) dieser Rampe (18) konfiguriert sind, um am Ausgang einen Druck des Fluids höher als den zweiten Druckwert P2 zu halten.

5. Installation zum Aufladen (1) nach einem der Ansprüche 1 oder 2, wobei der Kanal (2) eine Hauptleitung (12) umfasst, die mit einem ersten Druckminderer (14) versehen ist, der konfiguriert ist, um den Druck des Fluids auf einen ersten Druckwert P1 zu senken, und eine Sekundärleitung (13), die parallel zur Hauptleitung montiert ist, wobei die Sekundärleitung mit einem zweiten Druckminderer (15) versehen ist, der konfiguriert ist, um derart geregelt zu werden, um den Druck des Fluids entweder auf einen zweiten Druckwert P2, geringer als der erste Druckwert P1, oder auf einen dritten Druckwert P3, höher als der erste Druckwert P1 zu senken, wobei eine Rampe (18) stromaufwärts des zweiten Druckminderers (15) in der zweiten Leitung (13) angeordnet ist, wobei die Turbogeneratoren (4) dieser Rrampe (18) konfiguriert sind, um am Ausgang einen Druck des Fluids höher als den dritten Druckwert P3 zu halten.

6. Installation zum Aufladen (1) nach Anspruch 5, welche Steuerungsmittel (5, 16) umfasst, die konfiguriert sind, um in eine Regelung des zweiten Druckminderers (15) einzuwirken, um den Druck des Fluids auf den zweiten Druckwert P2 zu senken, solange die mindestens eine Ladestation (7) nicht aktiviert ist, und den Druck des Fluids auf den dritten Druckwert P3 zu erhöhen, wenn mindestens eine Ladestation (7) aktiviert ist.

7. Installation zum Aufladen (1) nach einem der Ansprüche 2 bis 7, wobei der Druck des Fluids stromaufwärts des oder der Druckminderer(s) (3, 14, 15, 23) einen Wert aufweist, der zwischen 3 bar und 70 bar enthalten ist, wobei die Turbogeneratoren (4) in Abhängigkeit von dem Wert dieses Druckes angepasst werden.

8. Installation zum Aufladen (1) nach Anspruch 7 im Zusammenhang mit einem der Ansprüche 5 oder 6, wobei der Druck des Fluids stromaufwärts des Druckminderers (14, 15) in der Größenordnung von 70 bar ist, der erste Druckwert P1 in der Größenordnung von 35 bar ist, der zweite Druckwert P2 in der Größenordnung von 34 bar ist und der dritte Druckwert P3 in der Größenordnung von 36 bar ist.

9. Installation zum Aufladen (1) nach einem der Ansprüche 1 bis 8, wobei das Fluid ein Gas ist.

10. Installation zum Aufladen (1) nach einem der Ansprüche 1 bis 9, wobei der Kanal (2) einen Eingang (2a) umfasst, der an eine Entnahmestelle angeschlossen ist, die in einem Netz (200) zum Zirkulieren eines Fluids angeordnet ist.

11. Installation zum Aufladen (1) nach Anspruch 10, wobei der Kanal (2) einen Ausgang (2a) umfasst, der an eine Injektionsstelle angeschlossen ist, die in einem Netz (200) zum Zirkulieren eines Fluids angeordnet ist.

## Claims

1. Installation (1) for recharging electric vehicles comprising at least one recharging station (7) provided with at least one socket (9) configured for the connection of an electric vehicle, a duct (2) for the circulation of a fluid, at least two turbogenerators (4) connected to the duct (2) and allowing the production of electricity and electric distribution means (5, 10) configured to electrically power the at least one recharging station (7) from the at least two turbogenerators (4), said duct (2) comprising a line provided with a pressure reducer (3, 23) which allows the pressure of the fluid to be reduced to a pressure value P, **characterised in that** the at least two turbogenerators (4) are mounted in parallel on a distribution manifold (18) upstream from the pressure reducer on this line and configured to keep, at the outlet, a pressure of the fluid greater than the pressure P, the distribution manifold being configured to power all or some of the turbogenerators (4) according to the variations of fluid consumption, management means (5, 20) for controlling the distribution manifold.

2. Recharging installation (1) according to claim 1, wherein the manifold (18) comprises lines (19) mounted in parallel and each equipped with a solenoid valve (20) and a turbogenerator (4), the management means comprising a cabinet (5) which manages the control of the solenoid valves (20) according to the variations of fluid consumption.

3. Recharging installation (1) according to one of claims 1 or 2, wherein the duct (2) comprises a main line (12) provided with a first pressure reducer (14) configured to reduce the pressure of the fluid to a first pressure value P1 and a secondary line (13) mounted in parallel to the main line, the secondary line being provided with a second pressure reducer (15) configured to reduce the pressure of the fluid to a second pressure value P2, lower than the first pressure value P1, a manifold (18) being arranged upstream from the first pressure reducer (14) on the first line (12), the turbogenerators (4) of the manifold (18) being configured to keep, at the outlet, a pressure of the fluid greater than the first pressure value P1.

4. Recharging installation (1) according to claim 3, wherein a manifold (18) is arranged upstream from the second pressure reducer (15) on the second line (13), the turbogenerators (4) of this manifold (18) being configured to keep, at the outlet, a pressure of the fluid greater than the second pressure value P2.

5. Recharging installation (1) according to one of claims 1 or 2, wherein the duct (2) comprises a main line (12) provided with a first pressure reducer (14) configured to reduce the pressure of the fluid to a first pressure value P1 and a secondary line (13) mounted in parallel to the main line, the secondary line being provided with a second pressure reducer (15) configured to be adjusted so as to reduce the pressure of the fluid, either to a second pressure value P2, lower than the first pressure value P1, or to a third pressure value P3, greater than the first pressure value P1, a manifold (18) being arranged upstream from the second pressure reducer (15) on the second line (13), the turbogenerators (4) of this manifold (18) being configured to keep, at the outlet, a pressure of the fluid greater than the third pressure value P3.

6. Recharging installation (1) according to claim 5, which comprises control means (5, 16) configured to act on the adjustment of the second pressure reducer (15) so as to reduce the pressure of the fluid to the second pressure value P2 as long as the at least one recharging station (7) is not activated and to increase the pressure of the fluid to the third pressure value P3 when at least one recharging station (7) is activated.

7. Recharging installation (1) according to one of claims 2 to 7, wherein the pressure of the fluid upstream from the pressure reducer(s) (3, 14, 15, 23) has a value comprised between 3 bars and 70 bars, the turbogenerators (4) being adapted according to the value of this pressure.

8. Recharging installation (1) according to claim 7 attached to one of claims 5 or 6, wherein the pressure of the fluid upstream from the pressure reducer (14, 15) is of the order of 70 bars, the first pressure value P1 being of the order of 35 bars, the second pressure value P2 being of the order of 34 bars and the third pressure value P3 being of the order of 36 bars.

9. Recharging installation (1) according to one of claims 1 to 8, wherein the fluid is a gas.

10. Recharging installation (1) according to one of claims 1 to 9, wherein the duct (2) comprises an inlet (2a) connected to an injection point arranged on a network (200) for circulating a fluid.

11. Recharging installation (1) according to claim 10, wherein the duct (2) comprises an outlet (2a) connected to an injection point arranged on a network (200) for circulating a fluid.
